(19) Europäisches Patentamt
European Patent Office
Office européen des brevets

(11) **EP 1 344 914 B1**

(12) **FASCICULE DE BREVET EUROPEEN**

(45) Date de publication et mention
de la délivrance du brevet:
**19.05.2010 Bulletin 2010/20**

(51) Int Cl.:
***F02B 23/06*** *(2006.01)*    ***F02B 1/12*** *(2006.01)*
***F02B 31/00*** *(2006.01)*

(21) Numéro de dépôt: **03290497.1**

(22) Date de dépôt: **03.03.2003**

(54) **Moteur à combustion interne avec dispositif d'injection de carburant**

Brennkraftmaschine mit Brennstoffeinspritzeinrichtung

Internal combustion engine having fuel injection device

(84) Etats contractants désignés:
**DE ES GB IT**

(30) Priorité: **15.03.2002 FR 0203213**

(43) Date de publication de la demande:
**17.09.2003 Bulletin 2003/38**

(73) Titulaire: **Institut Français du Pétrole**
**92852 Rueil-Malmaison Cedex (FR)**

(72) Inventeurs:
• **Gatellier, Bertrand**
**78380 Bougival (FR)**
• **Walter, Bruno**
**92250 La Garenne Colombes (FR)**

(56) Documents cités:
**EP-A- 0 683 306      DE-B- 1 055 873**
**US-A- 4 473 046      US-A- 4 858 578**
**US-A- 5 373 820      US-A- 5 875 743**
**US-A- 5 906 183**

• **STOMMEL P; DÜRNHOLZ M:
"GRUNDLAGENUNTERSUCHUNGEN ZUR
GEMISCHBILDUNG IM HOCHAUFGELADENEN,
DIREKTEINSPRITZENDEN DIESELMOTOR;
BERICHT AUS DER TÄTIGKEIT DER
FORSCHUNGSVEREINIGUNG
VERBRENNUNGSKRAFTMASCHINEN E. V. (fvv)"
MTZ MOTORTECHNISCHE ZEITSCHRIFT,
FRANCKH'SCHE VERLAGSHANDLUNG,
ABTEILUNG TECHNIK. STUTTGART, DE, vol. 55,
no. 11, 1 novembre 1994 (1994-11-01), pages
644-648, XP000476365 ISSN: 0024-8525**
• **PATENT ABSTRACTS OF JAPAN vol. 015, no. 374
(M-1160), 20 septembre 1991 (1991-09-20) -& JP
03 149315 A (YANMAR DIESEL ENGINE CO LTD),
25 juin 1991 (1991-06-25)**
• **PATENT ABSTRACTS OF JAPAN vol. 017, no. 544
(M-1489), 30 septembre 1993 (1993-09-30) -& JP
05 149137 A (KOMATSU LTD), 15 juin 1993
(1993-06-15)**
• **DATABASE WPI Section PQ, Week 199111
Derwent Publications Ltd., London, GB; Class
Q52, AN 1991-079377 XP002219665 -& SU 1 576
697 A (CH POLT I (SU); PROIZV OB CH
TRAKTORNY Z IM V (SU)), 7 juillet 1990
(1990-07-07)**

**Description**

La présente invention se rapporte à un moteur à combustion interne avec un dispositif d'injection directe de carburant.

Elle se rapporte plus particulièrement à un moteur à combustion interne à injection directe comprenant au moins un cylindre, une culasse, un piston coulissant dans ce cylindre, des moyens d'admission d'au moins un fluide gazeux, un injecteur de carburant multi jets comportant un angle de jets de carburant et un angle de nappe de jets de carburant, et une chambre de combustion délimitée sur un côté par la face supérieure du piston comprenant un téton s'érigeant vers la culasse et disposé dans un bol concave, comme décrit à titre d'exemple dans le document DE 1 055 873.

Dans le cas de moteurs Diesel fonctionnant en mode homogène, il est connu de mélanger le carburant issu d'un injecteur multi jets avec le ou les fluides gazeux admis dans la chambre de combustion de ce moteur, tel que de l'air ou un mélange d'air et de gaz d'échappement recirculé (EGR), de manière à obtenir un mélange carburé homogène avant le démarrage de la combustion. Cette homogénéité du mélange carburé permet de réduire la consommation et de minimiser la production d'oxydes d'azote (NOx) et de particules, tel que cela est mieux décrit dans l'article scientifique de STOMMEL P et DURNHOLZ M intitulé : "Grundlagenuntersuchung zur Gemischbildung im hochaufgeladenen, direckteinspritzenden Dieselmotor" et publié dans MTZ, vol 55, no11, page 644 à 646, 1er novembre 1994.

Pour favoriser le mélange du carburant avec le fluide gazeux admis dans la chambre de combustion, il a été mis au point des moteurs comprenant des injecteurs avec un grand nombre de trous, de l'ordre de 20 trous. Ce type d'injecteur permet d'améliorer le fonctionnement du moteur en combustion homogène mais entraîne un mouillage de la paroi du cylindre par les gouttelettes du carburant, notamment lorsque l'aérodynamique interne de la chambre de combustion utilise un mouvement tourbillonnaire, ou swirl, du fluide gazeux admis qui projette ces gouttelettes sur cette paroi. Ce mouillage de la paroi par le carburant entraîne, non seulement une dégradation de la tenue du lubrifiant présent sur cette paroi ainsi que la création de suies, mais aussi une augmentation des émissions de polluants et une réduction des performances du moteur, notamment en augmentant sa consommation de carburant.

Dans le cas où ce moteur fonctionne en combustion traditionnelle, notamment à forte charge de manière à atteindre un fort couple et une forte puissance spécifique, un tel nombre de jets n'est pas compatible avec ce mode de combustion. En effet, lorsque les axes des jets de carburant sont trop proches circonférentiellement les uns des autres, les extrémités de ces jets se chevauchent les uns aux autres dans le bol, en empêchant de réaliser le mélange avec le fluide gazeux et en créant des zones trop riches en carburant, ce qui entraîne la formation de suies.

La présente invention se propose de remédier aux inconvénients mentionnés ci-dessus grâce à un moteur de conception simple et économique. Il s'agit d'un moteur pouvant fonctionner selon deux modes de combustion, le passage d'un mode à un autre se faisant principalement par modification du phasage des injections. La géométrie retenue des jets repose sur l'utilisation d'un injecteur à faible angle de nappe associé à un nombre particulier de jets pour, d'une part, assurer un mélange suffisamment homogène du carburant avec le ou les fluides gazeux admis (air ou air et gaz d'échappement recirculés) tout en évitant le mouillage de la paroi du cylindre par le carburant en mode de combustion homogène et, d'autre part, assurer une bonne indépendance de chaque jet de carburant en combustion traditionnelle.

A cet effet, l'invention concerne un moteur à combustion interne à injection directe comprenant au moins un cylindre, une culasse, un piston coulissant dans ce cylindre, des moyens d'admission d'au moins un fluide gazeux, un injecteur de carburant multi jets comportant un angle de jets de carburant entre les axes consécutifs desdits jets et un angle de nappe de jets de carburant, et une chambre de combustion délimitée sur un côté par la face supérieure du piston, ladite face comprenant un téton pointant vers la culasse en étant disposé dans un bol concave, caractérisé en ce que l'angle de jets de carburant est au moins égal à

$$\frac{10\pi}{FD}$$ où FD est le diamètre de fond du bol et en ce que l'angle de nappe est inférieur ou égal à $\dfrac{CD}{2F}$ où CD

est le diamètre du cylindre et F est la distance entre le point d'origine des jets de carburant et la position du piston correspondant à un angle de vilebrequin de 50° par rapport au point mort haut.

Préférentiellement, l'angle de nappe de jets de carburant peut être inférieur ou égal à 120°.

Avantageusement, l'angle de nappe peut être compris entre 40° et 100°.

L'angle au sommet du téton peut être choisi supérieur à l'angle de nappe d'une valeur comprise entre 0° et 30°.

Les axes des jets de carburant peuvent former avec le flanc du téton un angle d'intersection de l'ordre de 5°.

Les autres caractéristiques et avantages de l'invention apparaîtront à la lecture de la description donnée ci-après à partir d'un exemple non limitatif de réalisation et en se référant aux dessins annexés où :

- la figure 1 montre schématiquement un moteur à combustion interne avec un injecteur de carburant selon l'invention et
- la figure 2 est une vue en coupe selon la ligne 2-2 de la figure 1.

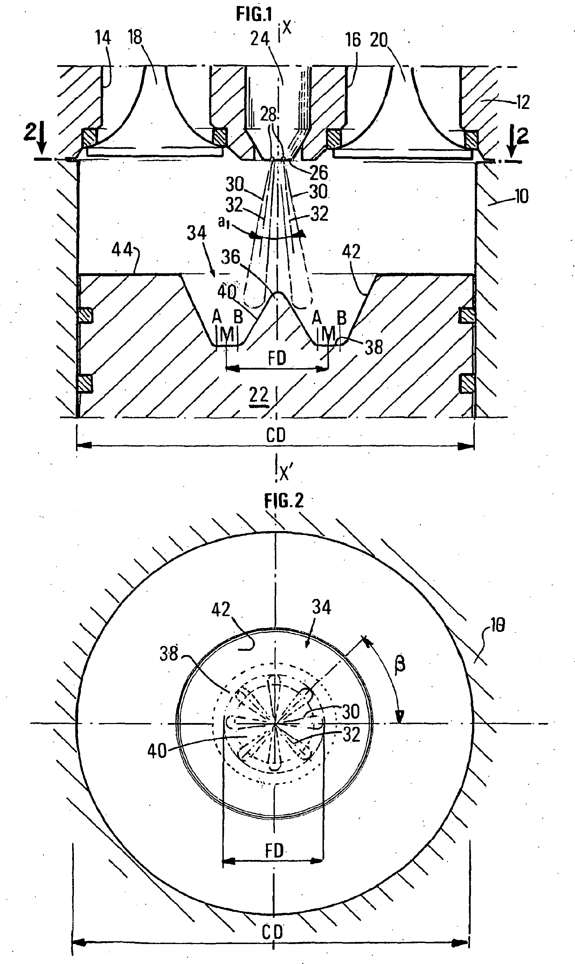

En se référant aux figures 1 et 2, un moteur à combustion interne à injection directe, de type Diesel, comprend au moins un cylindre 10 d'axe XX' et de diamètre CD, une culasse 12, au moins une tubulure d'admission 14 d'au moins un fluide gazeux, tel que de l'air ou un mélange d'air et de gaz recirculés (EGR), au moins une tubulure d'échappement 16, les tubulures étant commandées en ouverture, ou en fermeture, par un moyen d'obturation, tel que respectivement une soupape d'admission 18 et une soupape d'échappement 20, un piston 22 coulissant dans le cylindre 10 et un injecteur de carburant 24.

L'injecteur de carburant, qui est préférentiellement disposé dans l'axe XX' du cylindre, comporte au voisinage de son nez 26 une multiplicité d'orifices ou trous 28 à travers desquels est pulvérisé, dans la chambre de combustion, le carburant selon des jets 30 dont l'axe général est symbolisé par le trait d'axe 32.

L'injecteur de carburant est de type à faible angle de nappe $a_1$ et est choisi pour que la paroi du cylindre 10 ne soit jamais mouillée par le carburant pour toute position du piston comprise entre + 50° et +$\alpha$ ou entre -50° et -$\alpha$, où $\alpha$ représente l'angle du vilebrequin pour la phase d'injection choisie par rapport au point mort haut (PMH), cet angle $\alpha$ étant supérieur à 50° et inférieur ou égal à 180° pour obtenir une combustion de type homogène.

Si CD désigne le diamètre (en mm) du cylindre 10 et F la distance (en mm) entre le point d'origine des jets de carburants 30 et la position du piston correspondant à un angle de vilebrequin de 50°, alors l'angle de nappe $a_1$ (en degré) sera inférieur ou égal à

$$2 Arctg\, \frac{CD}{2F}.$$

Une fourchette angulaire typique pour l'angle de nappe $a_1$ est au plus de 120° et préférentiellement entre 40° et 100°.

La chambre de combustion est délimitée par la face interne de la culasse 12, la paroi circulaire du cylindre 10 et la face supérieure du piston 22.

Cette face supérieure du piston comporte un bol concave 34 à l'intérieur duquel est disposé un téton 36 qui s'élève vers la culasse 12 en se situant au centre de ce bol.

Dans l'exemple représenté, l'axe général du bol 34, l'axe de l'injecteur 24 et l'axe du téton 36 sont confondus avec l'axe XX' du cylindre mais, bien entendu, il peut être prévu que les axes du bol, de l'injecteur et du téton ne soient pas coaxiaux avec celui du cylindre mais l'essentiel réside dans la disposition selon laquelle l'axe général de la nappe de jets de carburant, l'axe du téton et l'axe du bol soient coaxiaux.

Le téton 36, de forme générale tronconique, comporte un sommet, de préférence arrondi, se poursuivant, en direction du fond 38 du bol, par un flanc incliné 40 sensiblement rectiligne puis, à partir du fond du bol 38, par une paroi latérale inclinée 42 sensiblement rectiligne rejoignant une surface sensiblement horizontale 44 de la face supérieure du piston 22.

Dans l'exemple de la figure 1, le fond du bol 38 est constitué d'une face sensiblement plane annulaire délimitée, en section, par les points A et B et le diamètre FD de ce fond s'apprécie au niveau du diamètre moyen de cette surface c'est à dire au niveau du point M milieu du segment AB.

Dans le cas où le fond de ce bol est formé par une surface concave arrondie, le diamètre FD du fond du bol sera relevé au niveau du point le plus bas de cette surface concave, c'est-à-dire au niveau du point le plus éloigné de la culasse 12.

L'angle au sommet du téton 36 et l'angle d'inclinaison de la paroi latérale 42 du bol 34 sont adaptés sensiblement à l'angle de nappe de jets de carburant 30, de façon à ce que le carburant soit injecté sensiblement le long du flanc 40 du téton puis remonte le long de la paroi latérale 42 du bol.

On choisit un angle au sommet du téton d'une façon telle qu'il soit supérieur à l'angle de nappe $a_1$ des jets de carburant d'une valeur comprise entre 0° et 30° et un angle d'inclinaison de la paroi latérale 42 du bol 34 qui soit inférieur à 45°.

Par angle de nappe, il est entendu l'angle au sommet que forme le cône issu de l'injecteur et dont la paroi périphérique fictive passe par tous les axes des jets de carburant.

Préférentiellement, il est prévu que les axes 32 des jets 30 forment avec le flanc 40 du téton 36 un angle d'intersection de l'ordre de 5°.

Comme déjà explicité, il est nécessaire que les écarts angulaires circonférentiels des jets soient prévus de telle manière que ces jets ne se recouvrent pas les uns aux autres dans le bol.

Pour cela, le demandeur a déterminé, par le calcul, l'écart angulaire idéal $\beta$ entre deux axes 32 de jets de carburants 30 consécutifs permettant d'obtenir, d'une part, le fonctionnement satisfaisant du moteur en mode de combustion traditionnelle et, d'autre part, d'assurer un mélange homogène du carburant avec le fluide gazeux, tel que de l'air ou un mélange d'air et de gaz d'échappement recirculé (EGR). Cet écart angulaire est à considérer dans un plan orthogonal à l'axe XX' (voir figure 2).

Associé à cet injecteur, le demandeur a également déterminé un bol idéal qui comportait un diamètre de fond de bol FD.

A partir de cela, l'angle $\beta$ minimum (en radian) entre les axes consécutifs de jets a donc été de $\dfrac{10\pi}{FD}$ (avec FD en mm).

De cet angle $\beta$, il pourra être ensuite calculé le nombre $N_t$ de trous 28 de l'injecteur 24, dit nombre calculé de trous, et par conséquent le nombre de jets 30 répartis régulièrement circonférentiellement autour de l'axe de l'injecteur.

Si $N_t$ n'est pas un nombre entier, il sera déterminé un nombre réel de trous par valeur inférieure la plus proche d'un entier.

A titre d'exemple, si le nombre calculé de trous $N_t$ est de 5,8, le nombre entier le plus proche de ce nombre calculé est 5 et, par conséquent, il sera utilisé un injecteur avec 5 trous.

L'utilisation conjointe de l'injecteur à angle de nappe $a_1$ relativement faible et d'un injecteur avec un nombre réel de trous, tel que défini précédemment, autorise un mode de combustion traditionnelle pour une injection de carburant près du point mort haut (PMH) tout en améliorant le mélange du carburant avec le fluide gazeux et en évitant le recouvrement des jets entre eux.

De plus, cette configuration permet d'éviter la présence de carburant liquide sur la paroi du cylindre tout en offrant de larges possibilités de contrôle de la pollution et des performances des moteurs, notamment en mode de combustion homogène.

A pleine charge et aux charges élevées, le moteur permet un bon entraînement du carburant vaporisé favorisant ainsi son mélange avec le fluide gazeux afin d'obtenir une bonne vitesse de combustion et des richesses de fonctionnement élevées, traduisant une bonne utilisation du fluide gazeux admis. Aux charges partielles, un angle de nappe réduit combiné à l'injecteur, comme décrit plus haut, permet d'éviter le mouillage de la paroi du cylindre et d'assurer le mélange du carburant avec le fluide gazeux.

## Revendications

1. Moteur à combustion interne à injection directe comprenant au moins un cylindre (10), une culasse (12), un piston (22) coulissant dans ce cylindre, des moyens d'admission (14, 18) d'au moins un fluide gazeux, un injecteur de carburant multi jets (24) comportant un angle de jets (β) de carburant entre les axes consécutifs desdits jets et un angle de nappe ($a_1$) de jets de carburant, et une chambre de combustion délimitée sur un côté par la face supérieure du piston (22), ladite face comprenant un téton (36) pointant vers la culasse (12) en étant disposé dans un bol concave (34), **caractérisé en ce que** l'angle (β) de jets de carburant est au moins égal à $\dfrac{10\pi}{FD}$ où FD est le diamètre de fond du bol (34) et **en ce que** l'angle de nappe ($a_1$) est inférieur ou égal à $\dfrac{CD}{2F}$ où CD est le diamètre du cylindre (10) et F est la distance entre le point d'origine des jets (30) de carburant et la position du piston (22) correspondant à un angle de vilebrequin de 50° par rapport au point mort haut.

2. Moteur selon la revendication 1, **caractérisé en ce que** l'angle de nappe ($a_1$) de jets de carburant (30) est inférieur ou égal à 120°.

3. Moteur selon la revendication 1 ou 2, **caractérisé en ce que** l'angle de nappe ($a_1$) est compris entre 40° et 100°.

4. Moteur selon l'une des revendications 1 à 3, **caractérisé en ce que** l'angle au sommet du téton (36) est choisi supérieur à l'angle de nappe ($a_1$) d'une valeur comprise entre 0° et 30°.

5. Moteur selon la revendication 1, **caractérisé en ce que** les axes (32) des jets de carburant (30) forment avec le flanc (40) du téton (36) un angle d'intersection de l'ordre de 5°.

## Claims

1. A direct-injection internal combustion engine including at least one cylinder (10), a cylinder head (12), a piston (22) that slides in this cylinder, intake means (14, 18) for at least one gaseous fluid, a multi-jet fuel injector (24) comprising a fuel jet angle (β) between the consecutive axes of said jets and a fuel jet angle of spread ($a_1$), and a combustion chamber delimited on one side by the upper face of piston (22), said face including a nipple (36) which is arranged in a concave bowl (34) and points towards the cylinder head (12), **characterised in that** the fuel jet angle (β) is at least equal to $\dfrac{10\pi}{FD}$ where FD is the bottom diameter of the bowl (34) and **in that** the angle of spread ($a_1$) is less than or equal to $\dfrac{CD}{2F}$ where CD is the diameter of the cylinder (10) and F is the distance between the point of origin of the fuel jets (30) and the position of the piston (22) corresponding to a crankshaft angle of 50° in relation to the top dead center.

2. The engine according to Claim 1, **characterised in that** the angle of spread ($a_1$) of fuel jets (30) is less than or equal to 120°.

3. The engine according to Claim 1 or 2, **characterised in that** the angle of spread ($a_1$) is between 40° and 100°.

4. The engine according to one of claims 1 to 3, **characterised in that** the angle at the vertex of the nipple (36) is selected so as to be greater than the angle

of spread ($a_1$) by a value of between 0° and 30°.

5. The engine according to claim 1, **characterised in that** the axes (32) of the fuel jets (30) form an angle of intersection with the flank (40) of the nipple (36) in the order of 5°.

**Patentansprüche**

1. Brennkraftmaschine mit Direkteinspritzung, umfassend mindestens einen Zylinder (10), einen Zylinderkopf (12), einen in diesem Zylinder gleitenden Kolben (22), Mittel (14, 18) zum Ansaugen mindestens eines gasförmigen Fluids, ein Mehrstrahl-Kraftstoffeinspritzventil (24), das einen Kraftstoffstrahlwinkel (β) zwischen den aufeinanderfolgenden Achsen der Strahlen und einen Lagenwinkel ($a_1$) der Kraftstoffstrahlen umfasst, und eine Brennkammer, die auf einer Seite von der oberen Seite des Kolbens (22) begrenzt ist, wobei die Seite einen Zapfen (36) umfasst, der auf den Zylinderkopf (12) weist und dabei in einem konkaven Napf (34) angeordnet ist, **dadurch gekennzeichnet, dass** der Kraftstoffstrahlwinkel (β) mindestens gleich $\frac{10\pi}{FD}$ ist, wobei FD der Bodendurchmesser des Napfes (34) ist, und dass der Lagenwinkel ($a_1$) kleiner oder gleich $\frac{CD}{2F}$ ist, wobei CD der Durchmesser des Zylinders (10) ist und F der Abstand zwischen dem Ursprungspunkt der Kraftstoffstrahlen (30) ist und die Position des Kolbens (22) einem Kurbelwellenwinkel von 50° im Verhältnis zum oberen Totpunkt entspricht.

2. Motor nach Anspruch 1, **dadurch gekennzeichnet, dass** der Lagenwinkel ($a_1$) der Kraftstoffstrahlen (30) kleiner oder gleich 120° ist.

3. Motor nach Anspruch 1 oder 2, **dadurch gekennzeichnet, dass** der Lagenwinkel ($a_1$) zwischen 40° und 100° liegt.

4. Motor nach einem der Ansprüche 1 bis 3, **dadurch gekennzeichnet, dass** der Winkel an der Spitze des Zapfens (36) um einen Wert zwischen 0° und 30° größer gewählt wird als der Lagenwinkel ($a_1$).

5. Motor nach Anspruch 1, **dadurch gekennzeichnet, dass** die Achsen (32) der Kraftstoffstrahlen (30) mit der Flanke (40) des Zapfens (36) einen Kreuzungswinkel von ungefähr 5° bilden.

**FIG.1**

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 1055873

**Littérature non-brevet citée dans la description**

- **STOMMEL P ; DURNHOLZ M.** *Grundlagenuntersuchung zur Gemischbildung im hochaufgeladenen, direckteinspritzenden Dieselmotor,* Novembre 1994, vol. 55 (11), 644-646